# EUROPEAN PATENT SPECIFICATION

(11) **EP 2 149 798 B1**
(45) Date of publication and mention of the grant of the patent: **07.09.2011**
(21) Application number: 08252601.3
(22) Date of filing: 31.07.2008
(51) Int. Cl.: G01S 1/00

(54) **Time tracking for mobile equipment**
Zeitverfolgung für ein mobiles Endgerät
Poursuite de temps pour équipement mobile

(43) Date of publication of application: 03.02.2010
(73) Proprietor: Telefonaktiebolaget LM Ericsson (publ), 164 83 Stockholm (SE)
(72) Inventor: Fomin, Michael, London SW11 2BW (GB)
(74) Representative: Åkerman, Mårten Lennart

(56) References cited:
- WO-A-2005/047922
- US-A1- 2004 190 378
- US-A1- 2005 070 223

## Description

### TECHNICAL FIELD

This invention relates to time tracking, and in particular to a method and an apparatus for allowing mobile equipment to maintain time tracking, even after the process of handing over from one cell to another cell of a cellular communications system has taken place.

### BACKGROUND OF THE INVENTION

It is recognized that it is useful for mobile equipment to track time precisely.

The Global Positioning System (GPS) is one of several actual or proposed systems, in which a constellation of satellites broadcast signals which can be freely used by ground or air equipment to determine the current location and velocity of the equipment, and the current time. The system uses the principle of tri-lateration to determine the user position.

It is well known that GPS chips can be included in mobile communications devices such as mobile phones and the like, so that the device can use information relating to its current location, in order to provide additional services to the user. Assisted GPS (A-GPS) is a system that can be used in a mobile communications device, in which some information is delivered to the GPS chipset via the mobile communication network. The GPS chipset then does not need to decode this information from the GPS satellite signals, which results in improved time-to-first-fix, time-to-fix and sensitivity. An improved time-to-fix also results in a reduced power consumption.

Fine time assistance (FTA) is the name given to a procedure of providing highly accurate GPS time information to the GPS chip, by which accuracies of 5µs are currently achievable. Fine time assistance has been shown to further improve time-to-first-fix, time-to-fix, location accuracy and sensitivity.

The FTA procedure involves the mobile equipment (ME) generating a strobe (that is, a pulse on an input/output signal line of the GPS chip in the ME) at a known GPS time.

Typically, when the GPS chip detects the occurrence of a strobe, it resets and starts a high precision counter. The highly accurate GPS time can then simply be determined by adding the counter value to the GPS time-of-strobe, which is passed to the GPS chip via a communication interface.

For the ME to accurately generate a strobe at a known GPS time, the ME must have knowledge of the cellular-GPS time relationship, or CGTR, of its currently camped cell. A CGTR is represented as two time-stamps, namely a cellular time stamp and a GPS time stamp, which represent the same instant in the time continuum. The CGTR of the currently camped cell is an input to the FTA procedure and is commonly referred to as the reference CGTR.

However, this has the limitation that the CGTR is valid for only one cell, and cannot be used if the ME is handed over to another cell.

US2005/0146462 discloses a system for determining a time relationship between an air interface time of a base station and a satellite time for a satellite constellation.

US2004/0190378 discloses a system in which a terminal determines a relationship between time as measured in a GPS system and time in a first basestation, and then determines a time difference between a start of a frame in the first basestation and a start of a frame in a second basestation, and determines a relationship between time as measured in the GPS system the time in the second basestation.

### SUMMARY OF THE INVENTION

According to a first aspect of the present invention, there is provided a method for maintaining timing information in a mobile communications device operating in a cellular communication network. A relationship is determined between time as measured in a first cell of the cellular communication network and time as measured in a timing system. At a clock start time, as measured in the first cell, a time count is started. The clock start time in the timing system is obtained from the clock start time in the first cell and the relationship between time as measured in the first cell and time as measured in the timing system. This time count is stopped at a clock stop time as measured in a second cell of the cellular communication network. The counted time is determined, and the clock stop time as measured in the timing system is determined by adding the counted time to the clock start time as measured in the timing system. Then, from the clock stop time as measured in the second cell of the cellular communication network and the clock stop time as measured in the timing system, a relationship is determined between time as measured in the second cell of the cellular communication network and time as measured in the timing system.

The step of determining the relationship between time as measured in a first cell of the cellular communication network and time as measured in a timing system may be performed by obtaining information from the cellular communication network.

Alternatively, the step of determining the relationship between time as measured in a first cell of the cellular communication network and time as measured in a timing system may be performed by determining said relationship in the mobile communications device without obtaining information from the cellular communication network.

The time count may be started by enabling a counter that is connected to receive clock signals.

The clock start time may be defined as a predetermined time as measured in a first cell of the cellular communication network.

According to a second aspect of the present invention, there is provided a timing circuit, for use in a mobile communications device, the timing circuit being adapted to perform the method according to the first aspect of the invention.

The timing circuit may comprise a counter, and a clock, wherein the counter is connected to receive signals from the clock, and to count the received signals when enabled.

The timing circuit may further comprise logic circuitry adapted to enable the counter in response to a first probe at the clock start time, and to disable the counter in response to a second probe at the clock stop time.

According to a third aspect of the present invention, there is provided a mobile communications device, comprising a timing circuit according to the second aspect of the invention.

The timing system may be a satellite positioning system, such as the Global Positioning System (GPS).

This has the advantage that the ME is able to deliver highly accurate timing information, for example GPS timing information to a GPS chipset, or to other time critical devices, without the need for assistance from an external source, such as a mobile network, and is able to provide valid information even in the event of a handover from one cell to another. In the specific case of a GPS system, the ability to provide precise GPS timing information to the GPS chipset is beneficial, as it reduces the number of tasks that the GPS chipset needs to perform, resulting in faster time-to-fix, improved location accuracy and improved GPS sensitivity.

### BRIEF DESCRIPTION OF DRAWINGS

Figure 1 is a schematic illustration of a part of a mobile communications network in accordance with an aspect of the present invention.
Figure 2 is a block diagram illustrating a part of a mobile communications device in accordance with an aspect of the present invention.
Figure 3 is a flow chart, illustrating a method in accordance with an aspect of the present invention.

### DETAILED DESCRIPTION OF PREFERRED EMBODIMENTS

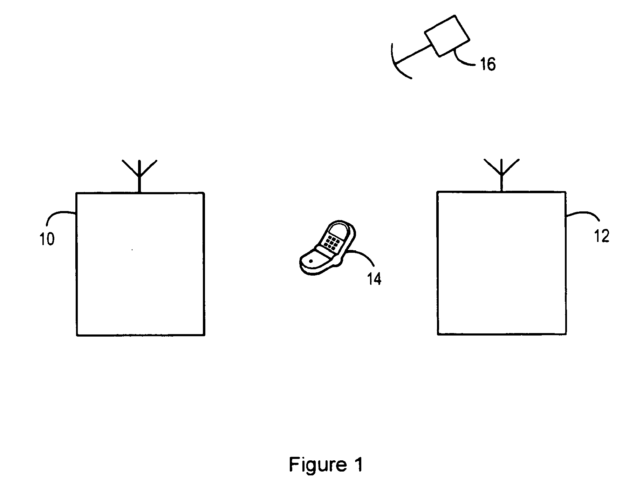

Figure 1 shows a part of a mobile communications network. Specifically, Figure 1 shows two base stations 10, 12, which form part of a cellular communications network. It will be apparent to the person skilled in the art that the network will contain many more than these two base stations. Each of the base stations 10, 12 provides coverage for wireless communications devices located in a respective cell, or coverage area. Figure 1 also shows a mobile wireless communications device, in the form of a mobile phone 14, which is able to communicate using the mobile communications network while it is in the coverage area of one of the base stations.

The mobile communications network may be any suitable cellular network, in which each base station transmits signals with known timing relationships. That is, each base station transmits data in frames having predetermined durations. However, the invention may be applied most usefully in networks in which the base stations are not synchronized with each other. Many conventional networks, such as GSM and UMTS networks operate in this way.

As discussed in more detail below, the mobile phone 14 is also able to receive signals from satellites 16 of a satellite positioning system. The invention is described herein with reference to the Global Positioning System (GPS), but other similar systems are known, or proposed, and the invention is equally applicable to such systems.

Further, although Figure 1 shows a mobile phone 14, it will be noted that the invention is applicable to any form of wireless communications device, although it is primarily applicable to mobile communications devices, or more generally to any mobile equipment (ME).

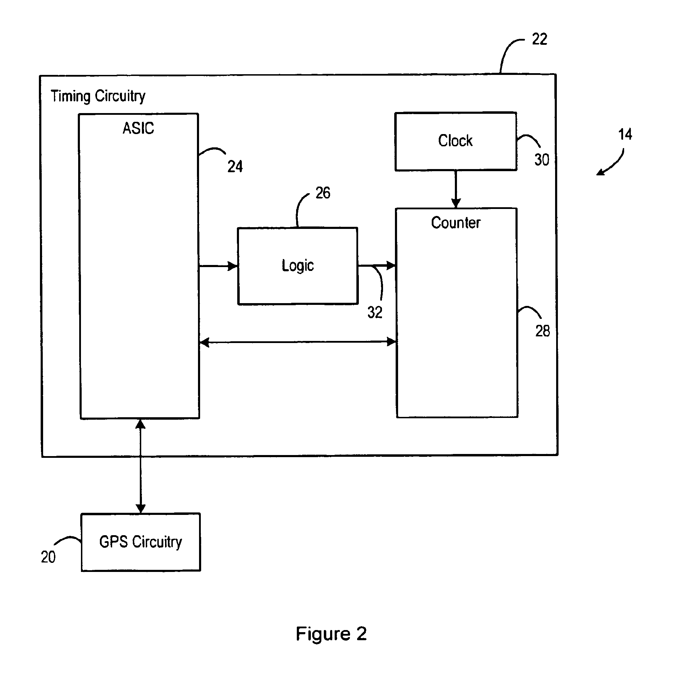

Figure 2 is a schematic block diagram of the mobile phone 14. As is conventional, the mobile phone 14 includes an antenna, RF circuitry, and various components such as a keyboard, a display and signal processing circuitry, that are relevant to its primary communications functions. These are not shown in Figure 2, or described further, except to the extent that they are relevant to an understanding of the present invention.

The mobile phone 14 includes GPS circuitry 20, which is connected to timing circuitry 22. The timing circuitry 22, in turn, includes an ASIC 24, which is connected to a logic block 26. The ASIC 24 and the logic block 26 are connected to a counter 28, which is also connected to receive signals from a clock 30. The counter 28 is a high precision counter, and the clock 30 can be derived from the main platform clock within the mobile phone 14, or an additional clock.

The timing circuitry 22 is also connected such that it receives information about the operation of the mobile phone 14, as described below. In addition, the GPS circuitry 20 is connected to a suitable antenna, such that it can receive suitable signals from satellites in the GPS satellite constellation, as will be apparent to the person skilled in the art.

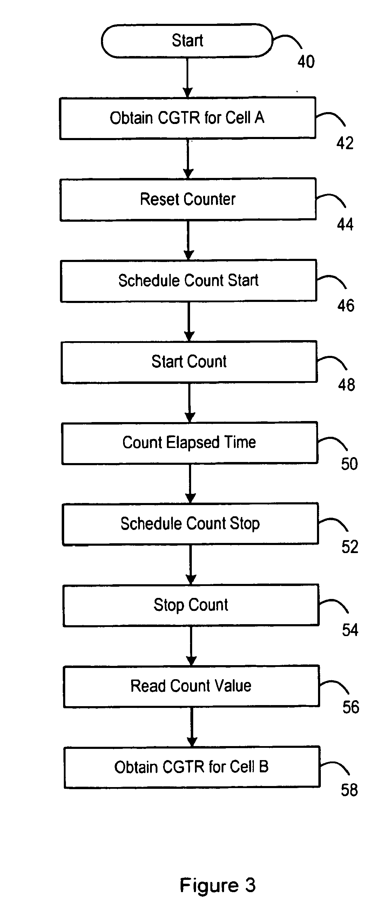

Figure 3 is a flow chart, illustrating a method in accordance with the present invention. The basic concept behind the invention is that the ME obtains and stores a time relationship between the time as measured according to the satellite system and the time as measured in the cell on which it is currently camped, and maintains this relationship during handovers. This means that, at any time the ME is required to produce a GPS fix, it will be capable of delivering fine time assistance to the GPS chip, without the need for additional network support.

In general terms, the method according to the invention includes the steps of obtaining the time relationship between the time as measured according to the satellite system and the time as measured in the cell on which it is currently camped, and then converting this relationship to a time relationship between the time as measured according to the satellite system and the time as measured in a different cell, which may be the cell with which the ME is performing a handover.

Although the invention is described with reference to its application in a device which can be used in a cellular communication network and in a satellite positioning system, the same principle can be applied to devices that operate in other timing systems which have their own specific time formats, such as other satellite and broadcast communication systems. In such cases, it is possible to obtain a time relationship between the time as measured according to the timing system and the time as measured in the cell on which it is currently camped, and then converting this relationship to a time relationship between the time as measured according to the timing system and the time as measured in a different cell.

Figure 3 illustrates this method in more detail. The process starts at step 40, at which time the ME is camped on a first cell (referred to below as cell A). At step 42, the ME obtains knowledge of the cellular-GPS time relationship (CGTR) for cell A. The CGTR can be obtained in one of two ways. One possibility is that information can be obtained directly from the network in a GPS time assistance message. Alternatively, as shown in Figure 3 and described below, the ME can determine this relationship itself.

This procedure is commonly used in uplink fine time assistance procedures, that is, procedures where the network requests the CGTR from the ME. Specifically, determination by the ME of the CGTR for the cell on which it is camped is performed by estimating a reference CGTR and correcting it against the GPS satellite signals, from which accurate time information is available.

First, the ME signaling stack is requested to generate a hardware timing strobe at an arbitrary cellular time in the near future (typically 100ms). This is known as the cellular time-of-strobe. However, since there is no reference CGTR available at this time, the GPS time at this instant (i.e., the GPS time-of-strobe) cannot be determined. Instead, the GPS time-of-strobe is estimated. The estimated GPS time-of-strobe and the strobe itself are passed to the GPS chipset 20, which performs the necessary measurements of the GPS satellite signals to accurately track the true GPS time. From this information, the GPS chipset 20 can determine the precise error offset on the estimated GPS time-of-strobe, resulting in the precise GPS time-of-strobe. The cellular time-of-strobe and this precise GPS time-of-strobe together define the CGTR of the current cell.

As is known, the CGTR of the current cell can be used to provide assistance to the GPS circuitry 20. When a handover is expected, it is useful to know the CGTR of the new cell (referred to below as cell B). However, since cellular times between neighboring cells are not synchronized, the CGTR for cell A is not the same as the CGTR for cell B and, indeed, there is no known relationship between the CGTR for cell A and the CGTR for cell B. It is therefore advantageous for the ME to be able to obtain the CGTR of cell B, based on knowledge of the CGTR of cell A.

The following process is therefore performed, when it is determined by the timing circuitry 22, based on an input from a controller of the ME, that a handover is about to occur, but before the handover occurs.

In step 44, the counter 28 is reset. Specifically, it is ensured that a Counter Enable line 32 from the logic block 26 to the counter 28 is LOW (i.e. that the counter 28 is not counting the pulses generated by the clock 30), and then a Reset signal is sent from the ASIC 24 to the counter 28 to set the counter value to zero.

In step 46, the start of a time count is scheduled for an arbitrary yet known cellular time (CellTime0), as measured in the current cell, cell A. At this arbitrary time, in step 48, a "start-counter" rising edge is applied from the logic block 26 to the counter 28 on the Counter Enable line 32, and this starts the counter 28. Specifically, as shown in step 50, the counter counts the time elapsed since the clock start time by counting the clock ticks received from the clock 30. The "start-counter" rising edge is performed by scheduling a timing strobe from the ASIC 24 to the logic block 26, and using logic in the logic block 26 to latch HIGH the Counter Enable line 32 when this strobe is received.

The ability to generate a timing strobe is already known, and is used in existing FTA procedures.

The clock start time as measured in cell A of the cellular system (CellTime0) is thus known. The clock start time as measured in the GPS system (GPSTime0) can therefore be determined by using the known relationship between time as measured in cell A of the cellular system and time as measured in the GPS system, i.e. the CGTR of cell A, as obtained in step 42.

At this point the ME is precisely tracking GPS time as it has knowledge of GPS time at one particular instant, and a counter tracking the elapsed time since this instant.

At some time, the ME then performs a handover from cell A to cell B, according to a conventional procedure, which will not be described further herein, it being noted simply that the ME no longer detects the precise timing of signals from cell A, but is able to detect the precise timing of signals from cell B.

At step 52, the ME schedules the stop of the time count for an arbitrary yet known cellular time (CellTime1), as measured in the new cell, cell B. In step 54, at this arbitrary time instant, a "stop-counter" falling edge is applied from the logic block 26 to the counter 28 on the Counter Enable line 32, and this stops the counter 28. This "stop-counter" falling edge is performed by scheduling a timing strobe from the ASIC 24 to the logic block 26, and using logic in the logic block 26 to latch LOW the Counter Enable line 32 when this strobe is received. As mentioned above, the ability to generate a timing strobe is a known feature used in existing FTA procedures.

At step 56, the ASIC 24 reads from the counter 28 the counter value, representing the elapsed time between the count start time and the count stop time, denoted DeltaGPS.

Then, in step 58, the CGTR of cell B is obtained from the knowledge of the GPS time and cellular time of the "stop-counter" falling edge. Specifically, the CGTR for cell B is the relationship between this time instant (CellTime1 ) as measured in cell B and as measured in the satellite system (GPSTime1). The value of CellTime1 is known because it was the scheduled stop time of the count, while the value of GPSTime1 is determined by adding the time count to the start time of the count, as measured in te satellite system, i.e. GPSTime1 = GPSTime0 + DeltaGPS.

The CGTR of cell B is then stored in the ME for use in subsequent GPS fixes.

Thus, even though cellular times between neighbouring cells are not synchronized, and hence there is no predetermined relationship between the CGTR for cell A and the CGTR for cell B, knowledge of a CGTR determined on cell A can still be used to determine the CGTR for cell B when the ME is handed over into cell B. As a result, if the network requires the CGTR from the ME for use in uplink FTA procedures, the ME can provide this, without needing to undergo a GPS fix procedure to deliver it.

There is thus provided a method for maintaining timing information that can usefully be applied to a mobile communications device.

## Claims

1. A method for maintaining timing information in a mobile communications device operating in a cellular communication network, the method comprising:
determining (42) a relationship between time as measured in a first cell of the cellular communication network and time as measured in a timing system;
starting (48) a time count at a clock start time as measured in the first cell of the cellular communication network;
determining, from the clock start time as measured in the first cell of the cellular communication network and said relationship between time as measured in the first cell of the cellular communication network and time as measured in the timing system, a clock start time as measured in the timing system;
stopping (54) the time count at a clock stop time as measured in a second cell of the cellular communication network;
determining (56) a counted time as a result of the time count;
determining the clock stop time as measured in the timing system by adding the counted time to the clock start time as measured in the timing system;
determining (58), from the clock stop time as measured in the second cell of the cellular communication network and the clock stop time as measured in the timing system, a relationship between time as measured in the second cell of the cellular communication network and time as measured in the timing system.

2. A method as claimed in claim 1, wherein the step of determining a relationship between time as measured in a first cell of the cellular communication network and time as measured in a timing system comprises obtaining information from the cellular communication network.

3. A method as claimed in claim 1, wherein the step of determining a relationship between time as measured in a first cell of the cellular communication network and time as measured in a timing system comprises determining said relationship in the mobile communications device without obtaining information from the cellular communication network.

4. A method as claimed in any preceding claim, comprising starting the time count by enabling a counter that is connected to receive clock signals.

5. A method as claimed in any preceding claim, wherein the clock start time is defined as a predetermined time as measured in a first cell of the cellular communication network.

6. A method as claimed in any preceding claim, wherein the timing system is a satellite positioning system.

7. A method as claimed in claim 6, wherein the satellite positioning system is the Global Positioning System, the method further comprising, after determining the relationship between time as measured in the second cell of the cellular communication network and time as measured in the timing system, providing timing assistance information to Global Positioning System circuitry in the mobile communications device.

8. A timing circuit, for use in a mobile communications device, the timing circuit being adapted to:
determine a relationship between time as measured in a first cell of the cellular communication network and time as measured in a timing system;
initiate a time count start at a clock start time as measured in the first cell of the cellular communication network;
determine a clock start time as measured in the timing system, from said clock start time as measured in the first cell of the cellular network and said relationship between time as measured in the first cell of the cellular network and time as measured in the timing system;
initiate a time count stop at a clock stop time as measured in a second cell of the cellular communication network;
determine from a counter a counted time;
determine the clock stop time as measured in the timing system by adding the counted time to the clock start time as measured in the timing system; and to
determine, from the clock stop time as measured in the second cell of the cellular communication network and the clock stop time as measured in the timing system, a relationship between time as measured in the second cell of the cellular communication network and time as measured in the timing system.

9. A timing circuit as claimed in claim 8, further comprising a counter, and a clock, wherein the counter is connected to receive signals from the clock, and to count the received signals when enabled.

10. A timing circuit as claimed in claim 9, further comprising logic circuitry adapted to enable the counter in response to a first probe at the clock start time, and to disable the counter in response to a second probe at the clock stop time.

11. A timing circuit as claimed in any of claims 8 to 10, wherein the timing system comprises a satellite positioning system.

12. A mobile communications device, comprising a timing circuit as claimed in any of claims 8 to 11.

13. A mobile communications device, comprising a timing circuit as claimed in claim 11, and further comprising circuitry for detecting signals from the satellite positioning system, wherein the timing circuit is adapted to send a timing assistance signal to said circuitry, based on the determined relationship between time as measured in the second cell of the cellular communication network and time as measured in the timing system.

## Patentansprüche

1. Verfahren zum Pflegen von Zeitinformationen in einem mobilen Kommunikationsgerät, das in einem zellularen Kommunikationsnetz tätig ist, wobei das Verfahren umfasst:
Bestimmen (42) einer Beziehung zwischen Zeit, wie in einer ersten Zelle des zellularen Kommunikationsnetzes gemessen, und Zeit, wie in einem Zeitmesssystem gemessen;
Starten (48) einer Zeitzählung bei einer Taktstartzeit, wie in der ersten Zelle des zellularen Kommunikationsnetzes gemessen;
Bestimmen aus der Taktstartzeit, wie in der ersten Zelle des zellularen Kommunikationsnetzes gemessen, und der Beziehung zwischen Zeit, wie in der ersten Zelle des zellularen Kommunikationsnetzes gemessen, und Zeit, wie im Zeitmesssystem gemessen, einer Taktstartzeit, wie im Zeitmesssystem gemessen;
Stoppen (54) der Zeitzählung bei einer Taktstoppzeit, wie i n einer zweiten Zelle des zellularen Kommunikationsnetzes gemessen;
Bestimmen (56) einer gezählten Zeit als Ergebnis der Zeitzählung;
Bestimmen der Taktstoppzeit, wie im Zeitmesssystem gemessen, durch Hinzuzählen der gezählten Zeit zur Taktstartzeit, wie im Zeitmesssystem gemessen;
Bestimmen (58) aus der Taktstoppzeit, wie in der zweiten Zelle des zellularen Kommunikationsnetzes gemessen, und der Taktstoppzeit, wie im Zeitmesssystem gemessen, einer Beziehung zwischen Zeit, wie in der zweiten Zelle des zellularen Kommunikationsnetzes gemessen, und Zeit, wie im Zeitmesssystem gemessen.

2. Verfahren nach Anspruch 1, wobei der Schritt des Bestimmens einer Beziehung zwischen Zeit, wie in einer ersten Zelle des zellularen Kommunikationsnetzes gemessen, und Zeit, wie in einem Zeitmesssystem gemessen, ein Erhalten von Informationen vom zellularen Kommunikationsnetz umfasst.

3. Verfahren nach Anspruch 1, wobei der Schritt des Bestimmens einer Beziehung zwischen Zeit, wie in einer ersten Zelle des zellularen Kommunikationsnetzes gemessen, und Zeit, wie in einem Zeitmesssystem gemessen, ein Bestimmen der Beziehung im mobilen Kommunikationsgerät ohne Erhalten von Informationen vom zellularen Kommunikationsnetz umfasst.

4. Verfahren nach einem der vorhergehenden Ansprüche, umfassend ein Starten der Zeitzählung durch Aktivieren eines Zählers, der angeschlossen ist, um Taktsignale zu empfangen.

5. Verfahren nach einem der vorhergehenden Ansprüche, wobei die Taktstartzeit als eine vorbestimmte Zeit, wie in einer ersten Zelle des zellularen Kommunikationsnetzes gemessen, definiert wird.

6. Verfahren nach einem der vorhergehenden Ansprüche, wobei das Zeitmesssystem ein satellitengestütztes Positionsbestimmungssystem ist.

7. Verfahren nach Anspruch 6, wobei das satellitengestützte Positionsbestimmungssystem das globale Navigationssystem ist, und das Verfahren nach dem Bestimmen der Beziehung zwischen Zeit, wie in der zweiten Zelle des zellularen Kommunikationsnetzes gemessen, und Zeit, wie im Zeitmesssystem gemessen, ein Bereitstellen von Informationen zur Unterstützung der Zeitmessung für die Schaltung des globalen Navigationssystems im mobilen Kommunikationsgerät umfasst.

8. Zeitglied zur Verwendung in einem mobilen Kommunikationsgerät, wobei das Zeitglied ausgelegt ist zum:
Bestimmen einer Beziehung zwischen Zeit, wie in einer ersten Zelle des zellularen Kommunikationsnetzes gemessen, und Zeit, wie in einem Zeitmesssystem gemessen;
Einleiten eines Zeitzählstarts bei einer Taktstartzeit, wie in der ersten Zelle des zellularen Kommunikationsnetzes gemessen;
Bestimmen einer Taktstartzeit, wie im Zeitmesssystem gemessen, aus der Taktstartzeit, wie in der ersten Zelle des zellulare Netzes gemessen, und der Beziehung zwischen Zeit, wie in der ersten Zelle des zellularen Netzes gemessen, und Zeit, wie im Zeitmesssystem gemessen;
Einleiten eines Zeitzählstopps bei einer Taktstoppzeit, wie in einer zweiten Zelle des zellularen Kommunikationsnetzes gemessen;
Bestimmen von einem Zähler einer gezählten Zeit;
Bestimmen der Taktstoppzeit, wie im Zeitmesssystem gemessen, durch Hinzuzählen der gezählten Zeit zur Taktstartzeit, wie im Zeitmesssystem gemessen; und
Bestimmen aus der Taktstoppzeit, wie in der zweiten Zelle des zellularen Kommunikationsnetzes gemessen, und der Taktstoppzeit, wie im Zeitmesssystem gemessen, einer Beziehung zwischen Zeit, wie in der zweiten Zelle des zellularen Kommunikationsnetzes gemessen, und Zeit, wie im Zeitmesssystem gemessen.

9. Zeitglied nach Anspruch 8, ferner umfassend einen Zähler und eine Uhr, wobei der Zähler angeschlossen ist, um Signale von der Uhr zu empfangen und die empfangenen Signale zu zählen, wenn aktiviert.

10. Zeitglied nach Anspruch 9, ferner umfassend eine Logikschaltung, die so ausgelegt ist, dass sie den Zähler als Antwort auf eine erste Sondierung bei der Taktstartzeit aktiviert, und den Zähler als Antwort auf eine zweite Sondierung bei der Taktstoppzeit deaktiviert.

11. Zeitglied nach einem der Ansprüche 8 bis 10, wobei das Zeitmesssystem ein satellitengestütztes Positionsbestimmungssystem umfasst.

12. Mobiles Kommunikationsgerät, umfassend ein Zeitglied nach einem der Ansprüche 8 bis 11.

13. Mobiles Kommunikationsgerät, umfassend ein Zeitglied nach Anspruch 11 und ferner umfassend eine Schaltung zum Erfassen von Signalen vom satellitengestützten Positionsbestimmungssystem, wobei das Zeitglied so ausgelegt ist, dass es basierend auf der bestimmten Beziehung zwischen Zeit, wie in der zweiten Zelle des zellularen Kommunikationsnetzes gemessen, und Zeit, wie im Zeitmesssystem gemessen, ein Signal zur Unterstützung der Zeitmessung an die Schaltung sendet.

## Revendications

1. Procédé pour conserver une information de rythme dans un dispositif de communication mobile fonctionnant dans un réseau de communication cellulaire, le procédé comprenant de :
déterminer (42) une relation entre un temps tel que mesuré dans une première cellule du réseau de communication cellulaire et un temps tel que mesuré dans un système de rythme ;
démarrer (48) un comptage de temps à un temps de démarrage d'horloge tel que mesuré dans la première cellule du réseau de communication cellulaire ;
déterminer, d'après le temps de démarrage d'horloge tel que mesuré dans la première cellule du réseau de communication cellulaire et ladite relation entre un temps tel que mesuré dans la première cellule du réseau de communication cellulaire et un temps tel que mesuré dans le système de rythme, un temps de démarrage d'horloge tel que mesuré dans le système de rythme ;
arrêter (54) le comptage de temps à un temps d'arrêt d'horloge tel que mesuré dans une seconde cellule du réseau de communication cellulaire ;
déterminer (56) un temps compté comme un résultat du comptage de temps ;
déterminer le temps d'arrêt d'horloge tel que mesuré dans le système de rythme en additionnant le temps compté au temps de démarrage d'horloge tel que mesuré dans le système de rythme ;
déterminer (58), d'après le temps d'arrêt d'horloge tel que mesuré dans la seconde cellule du réseau de communication cellulaire et le temps d'arrêt d'horloge tel que mesuré dans le système de rythme, une relation entre un temps tel que mesuré dans la seconde cellule du réseau de communication cellulaire et un temps tel que mesuré dans le système de rythme.

2. Procédé selon la revendication 1, dans lequel l'étape de détermination d'une relation entre un temps tel que mesuré dans une première cellule du réseau de communication cellulaire et un temps tel que mesuré dans un système de rythme comprend d'obtenir une information du réseau de communication cellulaire.

3. Procédé selon la revendication 1, dans lequel l'étape de détermination d'une relation entre un temps tel que mesuré dans une première cellule du réseau de communication cellulaire et un temps tel que mesuré dans un système de rythme comprend de déterminer ladite relation dans le dispositif de communication mobile sans obtenir une information du réseau de communication cellulaire.

4. Procédé selon une quelconque des revendications précédentes, comprenant de démarrer le comptage de temps en activant un compteur qui est connecté pour recevoir des signaux d'horloge.

5. Procédé selon une quelconque des revendications précédentes, dans lequel le temps de démarrage d'horloge est défini comme un temps prédéterminé tel que mesuré dans une première cellule du réseau de communication cellulaire.

6. Procédé selon une quelconque des revendications précédentes, dans lequel le système de rythme est un système de positionnement par satellite.

7. Procédé selon la revendication 6,d ans lequel le système de positionnement par satellite est le système mondial de radiorepérage (GPS), le procédé comprenant en outre, après la détermination de la relation entre un temps tel que mesuré dans la seconde cellule du réseau de communication cellulaire et un temps tel que mesuré dans le système de rythme, de fournir une information d'assistance de rythme aux circuits de système mondial de radiorepérage dans le dispositif de communication mobile.

8. Circuit de rythme à utiliser dans un dispositif de communication mobile, le circuit de rythme étant adapté afin de :
déterminer une relation entre un temps tel que mesuré dans une première cellule du réseau de communication cellulaire et un temps tel que mesuré dans un système de rythme ;
amorcer un démarrage de comptage de temps à un temps de démarrage d'horloge tel que mesuré dans la première cellule du réseau de communication cellulaire ;
déterminer un temps de démarrage d'horloge tel que mesuré dans le système de rythme, d'après ledit temps de démarrage d'horloge tel que mesuré dans la première cellule du réseau cellulaire et ladite relation entre un temps tel que mesuré dans la première cellule du réseau cellulaire et un temps tel que mesuré dans le système de rythme ;
amorcer un arrêt de comptage de temps à un temps d'arrêt d'horloge tel que mesuré dans une seconde cellule du réseau de communication cellulaire ;
déterminer d'après un compteur un temps compté ;
déterminer le temps d'arrêt d'horloge tel que mesuré dans le système de rythme en additionnant le temps compté au temps de démarrage d'horloge tel que mesuré dans le système de rythme ; et
déterminer, d'après le temps d'arrêt d'horloge tel que mesuré dans la seconde cellule du réseau de communication cellulaire et le temps d'arrêt d'horloge tel que mesuré dans le système de rythme, une relation entre un temps tel que mesuré dans la seconde cellule du réseau de communication cellulaire et un temps tek que mesuré dans le système de rythme.

9. Circuit de rythme selon la revendication 8, comprenant en outre un compteur et une horloge, dans lequel le compteur est connecté afin de recevoir des signaux de l'horloge et compter les signaux reçus quand il est activé.

10. Circuit de rythme selon la revendication 9, comprenant en outre des circuits logiques adaptés afin d'activer le compteur en réponse à un premier message d'essai au temps de démarrage d'horloge, et de désactiver le compteur en réponse à un second message d'essai au temps d'arrêt d'horloge.

11. Circuit de rythme selon une quelconque des revendications 8 à 10, dans lequel le système de rythme comprend un système de positionnement par satellite.

12. Dispositif de communication mobile, comprenant un circuit de rythme selon une quelconque des revendications 8 à 11.

13. Dispositif de communication mobile, comprenant un circuit de rythme selon la revendication 11, et comprenant en outre des circuits pour détecter des signaux émanant du système de positionnement par satellite, dans lequel le circuit de rythme est adapté afin d'envoyer un signal d'assistance de rythme auxdits circuits, sur la base de la relation déterminée entre un temps tel que mesuré dans la seconde cellule du réseau de communication cellulaire et un temps tel que mesuré dans le système de rythme.
